# EUROPÄISCHE PATENTSCHRIFT

(11) **EP 1 614 212 B1**
(45) Veröffentlichungstag und Bekanntmachung des Hinweises auf die Patenterteilung: **20.08.2008**
(21) Anmeldenummer: 04709195.4
(22) Anmeldetag: 09.02.2004
(51) Int. Cl.: H02K 15/04, H02K 3/50

(54) **VERFAHREN ZUR HERSTELLUNG VON WICKLUNGEN UND WICKLUNGSVERSCHALTUNGEN**
METHOD FOR PRODUCING COILS AND COIL CIRCUITS
PROCEDE DE FABRICATION D'ENROULEMENTS ET DE CIRCUITS D'ENROULEMENTS

(30) Priorität: 03.04.2003 DE 10315361
(43) Veröffentlichungstag der Anmeldung: 11.01.2006
(73) Patentinhaber: ROBERT BOSCH GMBH, 70442 Stuttgart (DE)
(72) Erfinder: OSSENKOPP, Stefan, 31177 Harsum (DE); ERMER, Martin, 31139 Hildesheim (DE)
(86) Internationale Anmeldenummer: PCT/DE2004/000214
(87) Internationale Veröffentlichungsnummer: WO 2004/088824

(56) Entgegenhaltungen:
- DE-A- 4 031 276
- DE-A- 4 339 384
- US-A1- 2002 067 094
- US-A1- 2003 015 932

## Beschreibung

### Technisches Gebiet

Wicklungen für elektrische Maschinen, wie zum Beispiel Asynchronmotoren, können im Wege der Einziehtechnik hergestellt werden. Die Einziehtechnik zur Herstellung von Wicklungen für elektrische Maschinen wird sowohl bei Niederspannungsmotoren, die bei Spannungen unterhalb von 50 V betrieben werden eingesetzt als auch bei Elektromotoren, die mit höheren Spannungen betrieben werden. Bei der Herstellung von Wicklungen für Niederspannungsmotoren (Betriebsspannung ≤ 50 V) werden die Wicklungen aus parallel liegenden Drähten hergestellt, um den erforderlichen Wicklungsquerschnitt zu gewährleisten.

### Stand der Technik

Bei Lenkantrieben für Fahrzeuge oder für Stellantriebe in Fahrzeugen kommen Niederspannungsmotoren zum Einsatz, die mit Betriebsspannungen unterhalb von 50 V betrieben werden. Bordnetze von Kraftfahrzeugen werden heute in der Regel als 12 V-Bordnetze ausgelegt; ferner sind Entwicklungstendenzen absehbar, auf das 42 V-Bordnetz in einem Kraftfahrzeug überzugehen. Bei beiden Bordnetzspannungen, d.h. bei einer Bordnetzspannung von 12 V und einer Bordnetzspannung von 42 V können als Asynchronmotoren ausgebildete Niederspannungsmotoren, die an einer Betriebsspannung ≤ 50 V betreibbar sind, eingesetzt werden. Die Wicklungen von Niederspannungsmotoren werden aus parallelen Drähten gefertigt, um den für diese elektrischen Maschinen erforderlichen Wicklungsquerschnitt zu gewährleisten. Eine Fertigung von Wicklungen für Niederspannungsmotoren, wie zum Beispiel Asynchronmotoren, aus parallelen Einzeldrähten führt jedoch zu einem hohen Verschaltungsaufwand an den Stirnseiten der im Allgemeinen manuell hergestellten Wicklung.

Die im Wege der Einziehtechnik hergestellten Wicklungen für Asynchronmotoren aus parallelen Drähten weisen ferner den Nachteil auf, dass im Wege der Einziehtechnik nur ein geringer Nutfüllfaktor erzielt werden kann. Aufgrund des niedrigen Nutzungsgrades der Nuten, in welchen die parallel verlaufenden Drähte eingelegt werden, sind zur Erzielung ausreichender Wicklungsquerschnitte eine größere Anzahl von Nuten erforderlich, was wiederum zu hohen Bauvolumina bei im Niederspannungsbereich von unterhalb 50 V betreibbaren elektrischen Maschinen, wie sie zum Beispiel Asynchronmaschinen als Lenkantrieb darstellen, führt.

Ferner ist es bekannt, bei der Herstellung von Gleichstrommotoren zur Herstellung der Wicklungspakete auf die Stecktechnik zurückzugreifen.

Gemäß des Einziehverfahrens, vgl. "Technologie des Elektromaschinenbau's" R. Tzscheutschler, H. Olbrich und W. Jordan, Verlag Technik GmbH, Berlin, Seite 336, Technologische Grundverfahren zur Herstellung von Wicklungen werden lose vorgewickelte Kupferlackdrahtspulen in halb geschlossene Nuten eingesetzt. Das Einziehverfahren wird zum Bewickeln von Ständern eingesetzt. Abhängig von der Hubgeschwindigkeit eines Hydraulikzylinders und der Ständerpaketlänge kann nutfüllend eine Spulenseite beziehungsweise Spule oder selbst eine komplette Wicklung eingezogen werden, wobei ein gleichzeitiges Einschieben von Deckenisolierkappen möglich ist. Das Grundprinzip beruht darauf, die Spulenseiten auf weniger als Nutschlitzbreite verdünnt und gegen die Nutschlitzkanten geschützt durch Kraftangriff an der vorderen Stirnseite mittels Hubbewegung in die Nuten einzuziehen. Die Ausrichtung der Drähte und der Schutz gegen die Nutschlitzkanten lässt sich durch polierte Stahlprofile, die auch als Einziehnadeln bezeichnet werden, erreichen. Im Einziehwerkzeug sind die Einziehnadeln an einem bestimmten Ständerblechschnitt sowie die Paketlänge angepasst. Die Spulen werden dem Wickelschema gemäß zwischen die Nadeln gewickelt oder gehängt.

Charakteristisch für die Lage eingezogener Spulen bei Ende des Einziehvorganges ist die im Ständerlängsschnitt ausgebildete S-Form. Die Spulen liegen oft auch nicht mittig zum Ständer. An der Austrittsseite überbrücken die Spulenköpfe sehnenartig den Bohrungsraum, was besonders ausgeprägt bei 2-poligen Wicklungen auftritt. Zu weiteren Einziehvorgängen sind deshalb Zwischenformoperationen nötig.

Mit dem Einziehverfahren lassen sich 1-, 2- und 3-strängige Wicklungen beliebiger Polzahl realisieren. Vorzugsweise werden sie als Einschichtwicklungen mit ebenen Anordnungen der Wickelköpfe ausgebildet. Zweischichtwicklungen sind in zwei Einziehvorgängen möglich, ein Deckkappenprofil sollte zur Zwischenisolierung eingesetzt werden.

Die Patentschrift DE 40 31 276 zeigt ein Verfahren zur Herstellung von mehrphasigen Wicklungen mit den Verfahrensschritten b) und c) des Anspruchs 1.

Die Patentschrift US 2003/015932 zeigt ein ähnliches Verfahren mit dem Verfahrensschritt a) des Anspruchs 1.

### Darstellung der Erfindung

Durch das erfindungsgemäß vorgeschlagene Verfahren zur Herstellung von 3-phasigen Wicklungen mit Verschaltung lassen sich hohe Nutfüllfaktoren, die bei der Einziehtechnik nur beschränkt erzielbar sind, realisieren. Aufgrund der erzielbaren hohen Nutfüllfaktoren können die Bauvolumina mit dem erfindungsgemäßen Verfahren gefertigter 3-phasiger Wicklungen reduziert werden. Darüber hinaus kann unter Anwendung des erfindungsgemäß vorgeschlagenen Verfahrens eine automatisierbare Herstellung der Wicklungen realisiert werden. Durch die Integration der Verschaltung des Sternpunktes an einer Seite eines Stators einer elektrischen Maschine sind separate bisher erforderliche, auch manuell durchgeführte Arbeitsgänge bei der Herstellung von 3-phasigen Wicklungen entbehrlich. Die Verschaltung des Sternpunktes kann in die Herstellung der 3-phasigen Wicklungen integriert werden, so dass sich einerseits eine automatisierbare Herstellung der Wicklung und andererseits eine im gleichen Herstellprozess erfolgende automatisierbare Herstellung des Sternpunktes erreichen lassen.

Als weiterer Vorteil des erfindungsgemäß vorgeschlagenen Verfahrens ist zu nennen, dass sich mit diesem eine kompakte, Bauvolumen-minimierte Sternpunktanordnung erzielen lässt, da die Herstellung des Sternpunktes im Rahmen des gleichen Herstellungsprozesses an ein und derselben Werkzeugaufnahme durchgeführt werden kann. Mit dem erfindungsgemäß vorgeschlagenen Verfahren können neben der Integration der Verschaltung der Sternpunktanordnung bei der Formung des Wickelkopfes keilförmig geprägte Drahtelemente eingesetzt werden. Durch keilförmig geprägte Drahtelemente kann in vorteilhafter Weise eine bessere Ausnutzung der Nut hinsichtlich einer Erhöhung des Nutfüllfaktors einer elektrischen Maschine erreicht werden. Damit wiederum ist die Erhöhung der spezifischen Leistung pro Bauvolumen einer elektrischen Maschine möglich.

3-phasige Wicklungen oder Rechteckdrahtwicklungen werden in der Regel aus geprägten Runddrahtformelementen hergestellt, die entweder als U-Bügelelemente, gerade Phasendrähte, als Endlosdraht bei der Einzugstechnik oder gerade mit einer Kröpfung versehene Sternpunktdrähte ausgebildet sein können.

Nach dem erfindungsgemäß vorgeschlagenen Verfahren wird der Runddraht zunächst keilförmig geprägt oder gewalzt. In einem weiteren Arbeitsschritt des erfindungsgemäß vorgeschlagenen Verfahrens werden die Drähte in einer Einrichtung zum Wickelformen positioniert. In entsprechenden Positionen werden die Stern- und Phasendrähte und U-Bügelelemente gesteckt und durch ein anschließendes Verschränken der Wickelschablonen zueinander der herzustellende Wickelkopf kompakt geformt. Der entstehende Drahtkäfig wird mittels einer Übersetzeinrichtung auf ein vorbereitetes Lamellenpaket übergesteckt, wobei das vorbereitete Paket entweder Papierisolationen enthalten kann oder eine Isolation auf dem Wege der Pulverbeschichtung herbeigeführt worden ist.

Eine Verschränkung auf der Gegenseite resultiert in einem Wickelschritt. Nach dem Verbinden der Leiterelemente mittels eines thermischen Fügeverfahrens, so zum Beispiel im

Wege des Widerstandsschweißens, des Laserstrahlschweißens, des Elektronenstrahlschweißens oder des Lötens, wird eine automatische Kontaktierung des Sternpunktes hergestellt. Neben dem Verbinden der Leiterelemente auf dem Wege stoffschlüssiger Fügeverfahren kann deren Verbindung auch über das Warmpressen oder eine kalte Kontaktiertechnik wie z.B. das Vernieten oder Verkrimpen herbeigeführt werden.

### Zeichnung

Anhand der Zeichnung wird die Erfindung nachstehend eingehender beschrieben.

Es zeigt:
- Figur 1: eine Prägevorrichtung zur Formung von Wickeldrähten,
- Figur 2a, 2b und 2c: Drahtelemente in verschiedenen Ausführungsvarianten zur Herstellung von Wicklungen,
- Figur 3: die Draufsicht auf ein Schränkwerkzeug,
- Figur 4: teilweise in ein Schränkwerkzeug eingesteckte Drahtelemente zur Formung des Wickelkopfes,
- Figur 5: einen fertig geformten Wickelkopf mit integriertem Sternpunkt,
- Figur 6: ein ausgeworfener Drahtkorb zum Einsetzen in ein Lamellenpaket,
- Figur 7: den Fügevorgang vom Drahtkorb und Lamellenpaket,
- Figur 8: die Darstellung der Schränkaufnahme auf der Schaltseite der Wicklung,
- Figur 9: die Darstellung der Schaltseite der Wicklung,
- Figur 10: die Darstellung der stoffschlüssigen Verbindung auf der Schaltseite
- Figur 11: das Schweißen des Sternpunktes auf der Sternpunktseite der Wicklung,
- Figuren 12a, 12b, 12c: jeweils Draufsicht, Seitenansicht und Details der Sternpunktseite einer ersten Wicklungsvariante,
- Figuren 13a, 13b, 13c: jeweils Draufsicht, Seitenansicht und Details der Sternpunktseite einer zweiten Wicklungsvariante und
- Figuren 14a, 14b, 14c: jeweils Draufsicht, Seitenansicht und Details der Sternpunktseite einer dritten Wicklungsvariante.

### Ausführungsvarianten

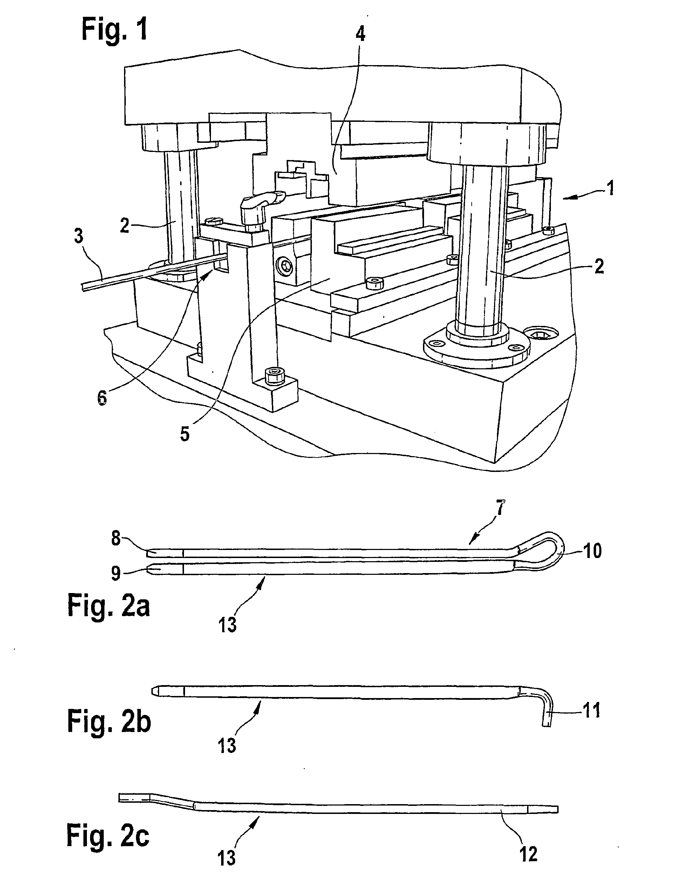

Der Darstellung gemäß Figur 1 ist eine Prägevorrichtung zur Formgebung von als Wicklungsmaterial eingesetzten Drahtelementen zu entnehmen.

In einem Prägewerkzeug 1, wie es in Figur 1 schematisch dargestellt ist, wird ein in Stabform zugeführtes Drahtmaterial verformt. Das in Stabform zugeführte Drahtmaterial 3 durchläuft einen Materialeinlauf 6 und gelangt in den Bereich zwischen einem ersten Formteil 4 und zweiten Formteil 5. Die beiden Formteile 4, 5 sind jeweils in Prägeteilen des Prägewerkzeuges 1 aufgenommen, welche über Hydraulikstempel 2 zusammen- oder auseinanderfahrbar sind. Anstelle von Hydraulikstempeln 2 kann das Zusammen- oder Auseinanderfahren der Formteile 4, 5 auch über Pneumatikzylinder oder Elektroantriebe erfolgen. Entsprechend der Formgebung des ersten Formteils 4 und des zweiten, zum ersten Formteil 4 komplementär ausgebildeten Formteils 5 kann dem über den Materialeinlauf 6 in das Prägewerkzeug 1 einlaufenden, in Stabform vorliegenden Drahtmaterial 3 beispielsweise eine Keilform 13 aufgeprägt werden (vgl. Darstellung gemäß Figur 2).

Neben der Keilform 13 lässt sich in dem Prägewerkzeug 1 dem in Stabform in dieses einlaufende Drahtmaterial 3 auch eine andere Geometrie aufprägen, welche den Nutfüllfaktor von Nuten in einer elektrischen Maschine steigert.

Den Figuren 2a, 2b und 2c sind Drahtelemente in verschiedenen Ausführungsvarianten zur Herstellung von mehrphasigen Wicklungen zu entnehmen.

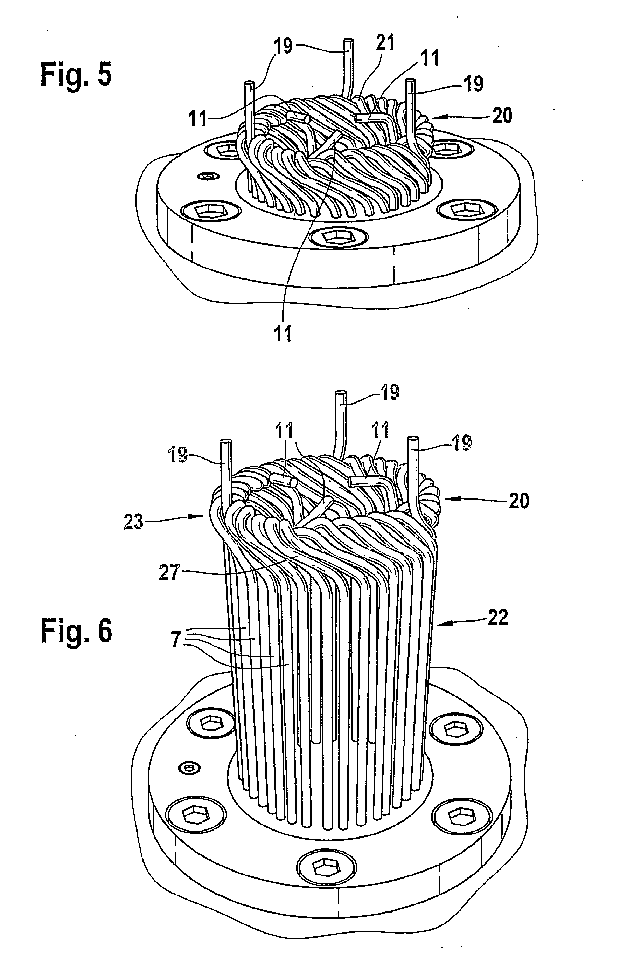

Gemäß Figur 2a ist ein U-Bügelelement 7, welches vor einem Biegevorgang das in Figur 1 dargestellte Prägewerkzeug 1 durchlaufen hat und demzufolge im Bereich seiner beiden Schenkel mit einer Keilform 13 versehen ist, an einer Rundung 10 derart gebogen, dass die beiden Schenkel des U-Bügelelements 7 jeweils in einem ersten Drahtende 8 beziehungsweise in einem zweiten Drahtende 9 auslaufen. Bei der nachfolgenden Herstellung einer Wicklung 32 (vgl. Darstellung in den Figuren 6 beziehungsweise 7) sind die Rundungen 10 an der Außenseite einer Sternpunktseite angeordnet, während die Drahtenden 8, 9 auf der Schaltseite der Wicklung 32 liegen. Bei der Fertigung der U-Bügelelemente 7 kann zunächst ein Biegevorgang und ein sich anschließender Prägeschritt erfolgen - die Fertigungsreihenfolge kann jedoch auch in umgekehrter Weise erfolgen. Sinngemäß gilt die erwähnte Abfolge der Fertigungsschritte sowohl für U-Bügelelemente 7, Sternpunktdrähte 11 sowie Phasendrähte 12.

Figur 2b ist weiterhin ein Sternpunktdraht 11 zu entnehmen, dem ebenfalls die Keilform 13 aufgeprägt ist. Der Sternpunktdraht 11 umfasst ein um 90° zum Drahtverlauf gewinkelt angeordnetes Endstück, welches während der Herstellung der Wicklung mit einem Sternpunktring stoffschlüssig verbunden wird.

Figur 2c ist darüber hinaus ein Phasendraht 12 entnehmbar, dem ebenfalls die Keilform 13 aufgeprägt ist, welche den Nutfüllfaktor in einer Wicklung einer elektrischen Maschine signifikant verbessert. Die in Figur 2c dargestellte Kröpfung des Phasendrahtes 12 ergibt sich aus den Formen des Wickelkopfes. Zunächst werden die Phasendrähte 12, die gerade ausgebildet sind, in ein Schränkwerkzeug eingesteckt. Prinzipiell ist es möglich, dass die zunächst geraden Phasendrähte 12 beim Wickelkopfformen gerade bleiben, die in Figur 2c dargestellte Kröpfung der Phasendrähte 12 kann sich an diesen je nach Teilkreisdurchmesser des eingesetzten Schränkwerkzeuges ergeben.

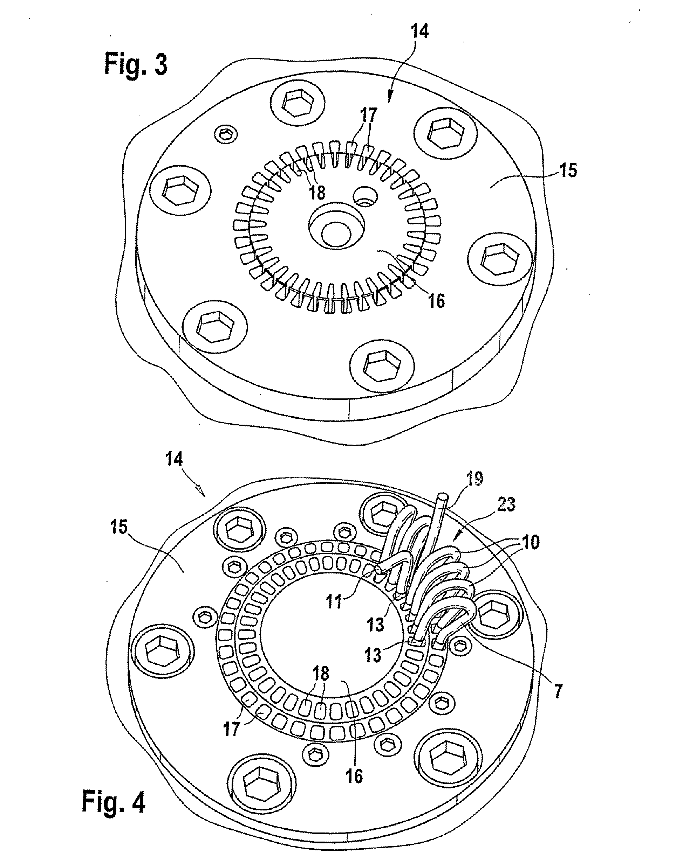

Figur 3 ist die Draufsicht auf ein Schränkwerkzeug zu entnehmen.

Das in Figur 3 dargestellte Schränkwerkzeug 14 umfasst eine Außenscheibe 15, die stationär angeordnet ist sowie eine Innenscheibe 16, die relativ zur stationär aufgenommenen Außenscheibe 15 verdrehbar ist. Die Außenscheibe 15 und die Innenscheibe 16 des Schränkwerkzeuges 14 können auch beide beweglich sein. Mit beiden dargestellten Ausführungsvarianten des Schränkwerkzeuges 14 lässt sich eine Relativbewegung einer Außenscheibe 15 zu einer Innenscheibe 16 erzeugen, wodurch ein Verschränken zur Formung eines Wicldungskopfes möglich ist.

Am Innenumfang der Außenscheibe 15 sind in regelmäßige Abständen voneinander erste Öffnungen 17 ausgebildet, die einen etwa keilförmigen Öffnungsquerschnitt aufweisen. Am Außenumfang der Innenscheibe 16 sind in identischer Teilung zu den ersten Öffnunggen 17 am Innenumfang der stationären Außenscheibe 15 zweite Öffnungen 18 ausgebildet, die ebenfalls einen keilförmig ausgebildeten Öffnungsquerschnitt aufweisen. Über eine Verdrehung der Innenscheibe 16 relativ zur stationär angeordneten Außenscheibe 15 erfolgt ein Verschränken von in die ersten Öffnungen 17 und zweiten Öffnungen 18 eingeführten U-Bügelelemente 7 gemäß der Darstellung in Figur 2.

Figur 4 ist die Darstellung eines Schränkwerkzeuges zu entnehmen, in welches zum Teil Drahtelemente zur Formung eines Wickelkopfes eingeführt sind.

Das in Figur 4 in einer perspektivischen Draufsicht dargestellte Schränkwerkzeug 14 umfasst die stationär angeordnete Außenscheibe 15 sowie die relativ zu dieser verdrehbare Innenscheibe 16. Die ersten Öffnungen 17 der stationären Außenscheibe 15 umschließen die an der Außenumfangsfläche der Innenscheibe 16 ausgebildeten zweiten Öffnungen 18 ringförmig. Sowohl die ersten Öffnungen 17 als auch die zweiten Öffnungen 18 weisen einen im Wesentlichen keilförmig konfigurierten Querschnitt auf, der komplementär zur Keilform 13 der in Figur 2 dargestellten Drahtelemente 7, 11 und 12 ausgebildet ist.

In der Darstellung gemäß Figur 4 sind in die ersten Öffnungen 17 sowie die zweiten Öffnungen 18 die Schenkel der U-Bügelelemente 7 derart eingesteckt, dass deren Rundungen 10 an einer Sternpunktseite 23 einer noch zu fertigenden Wicklung liegen. Ferner ist in eine zweite Öffnung 18 am Außenumfang der Innenscheibe 16 ein Sternpunktdraht 11 eingeführt, dessen auf der Sternpunktseite 23 liegendes Ende abgewinkelt ist. Dem Sternpunktdraht 11 mit abgewinkeltem Ende gegenüberliegend ist in die korrespondierende erste Öffnung 17 am Innenumfang der stationären Außenscheibe 15 ein Leiterelement 19 eingelassen. Bei dem Leiterelement 19 handelt es sich um einen Phasendraht. Dieser dient zur Bestromung der Wicklung der herzustellenden 3-phasigen Wicklung oder der Rechteckdrahtwicklung, wobei die Verwendung eines steifen, dicken Drahtes als Leiterelement 19 die Möglichkeit bietet, an diesem direkt den Stromanschluß der zu fertigenden Wicklung auszubilden, der z.B. als Steckkontakt beschaffen sein kann.

Figur 5 ist ein fertig geformter Wickelkopf mit integriertem Sternpunkt zu entnehmen.

Nach dem Einstecken von U-Bügelelementen 7 in die zueinander korrespondierenden Öffnungen 17 und 18 an der Außenscheibe 15 und der Innenscheibe 16 erfolgt ein Verschränken der U-Bügelelemente 7, d.h. eine Relativbewegung der beiden in den Schränkwerkzeugen 14 aufgenommenen Schenkel der U-Bügelelemente 7 zueinander. Der entstehende Wickelkopf 20 ist in einer perspektivisch wiedergegebenen Draufsicht in Figur 5 dargestellt. Der Wickelkopf 20 umfasst einen integrierten Sternpunkt 21, der beim Verschränken der in die Öffnungen 17 beziehungsweise 18 eingesteckten U-Bügelelemente 7 in einem Arbeitsgang hergestellt wird. Die abgewinkelten Enden der Sternpunktdrähte 11 weisen sternförmig einander zu. Der beim Verschränken entstehende Drahtkorb ist in Figur 5 noch im Schränkwerkzeug 14 umschlossen und nicht dargestellt. Den einzelnen Sternpunktdrähten 11 an der Außenseite des Wickelkopfes 20 gegenüberliegend sind die Leiterelemente 19 angeordnet, über welche eine Bestromung der herzustellenden Wicklung erfolgt. Die Formung des Wickelkopfes 20 gemäß der Darstellung in Figur 5 erfolgt durch ein Verschränken, d.h. einer Relativbewegung von Innenscheibe 16 und Außenscheibe 15 des Schränkwerkzeuges 14 entsprechend einer Wickelschablone.

Figur 6 zeigt einen aus einem Werkzeug ausgeworfenen Drahtkorb zum Einsetzen in ein Lamellenpaket einer elektrischen Maschine.

Wie der Darstellung gemäß Figur 6 entnehmbar ist, ist der Wickelkopf 20 an der Sternpunktseite 23 eines Drahtkorbes 22 ausgebildet. Unterhalb des Wickelkopfes 20 sind verschränkte Wicklungsdrähte 27, die einen keilförmigen Querschnitt aufweisen, dargestellt. Die Mantelfläche des Drahtkorbes 22 wird durch die U-Bügelelemente 7 gebildet, die in ihrem oberen Bereich unterhalb der Rundung 10 eine Verschränkung 27 aufweisen und unterhalb der Verschränkung 27 im Wesentlichen senkrecht zueinander verlaufen. An der Sternpunktseite 23 des Wickelkopfes 20 sind die Sternpunktdrähte 11 dargestellt, deren Enden einander zuweisen und mit einem in Figur 6 nicht dargestellten Sternpunktring stoffschlüssig verbunden sind. Den Sternpunktdrähten 11 jeweils an der Außenseite des Wickelkopfes 20 gegenüberliegend befinden sich die Leiterelemente 19 zur Bestromung der noch herzustellenden Wicklung.

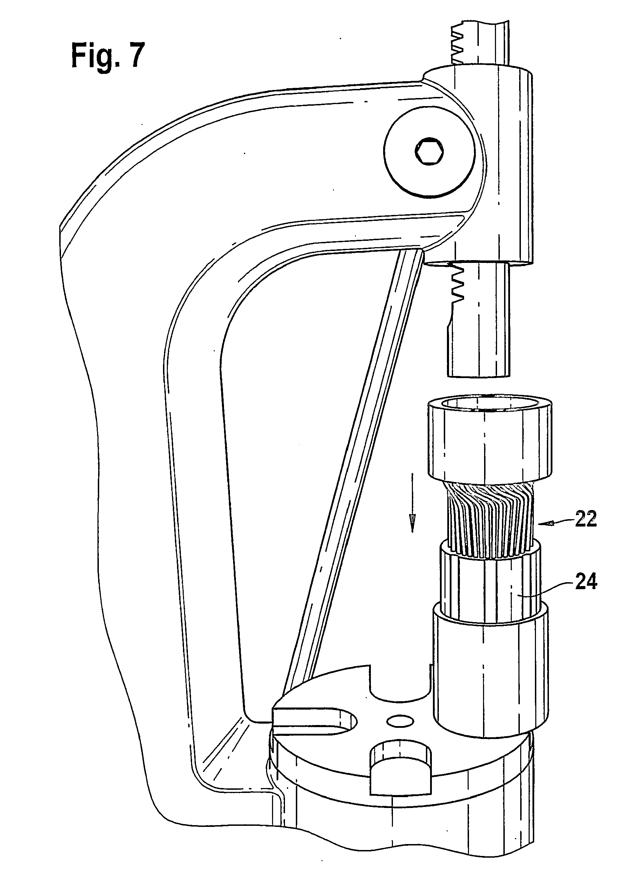

Figur 7 ist der Fügevorgang des Drahtkorbes mit einem Lamellenpaket einer elektrischen Maschine zu entnehmen.

Eine Übersetzereinrichtung, die in Figur 7 lediglich schematisch angedeutet ist, umfasst einen Stempel, mit welchem unter Zwischenschaltung eines Übertragungselementes der Drahtkorb 22 in Pfeilrichtung auf ein Lamellenpaket eingeschoben wird. Zum Schutz des Wickelkopfes 20 des in diesem integrierten Sternpunktes 21 sowie zum Schutz der Leitungselemente 19 ist an der Sternpunktseite 23 des Drahtkorbes 22 das Übertragungselement angeordnet. Das Lamellenpaket 24 kann bereits mit einer Papierisolation versehen sein; ferner kann die Isolation durch Pulverbeschichtungsverfahren erfolgen. Beim Fügevorgang gemäß der Darstellung in Figur 7 ist das Lamellenpaket 24 gemäß eines der aufgezählten Isolationsverfahren isoliert.

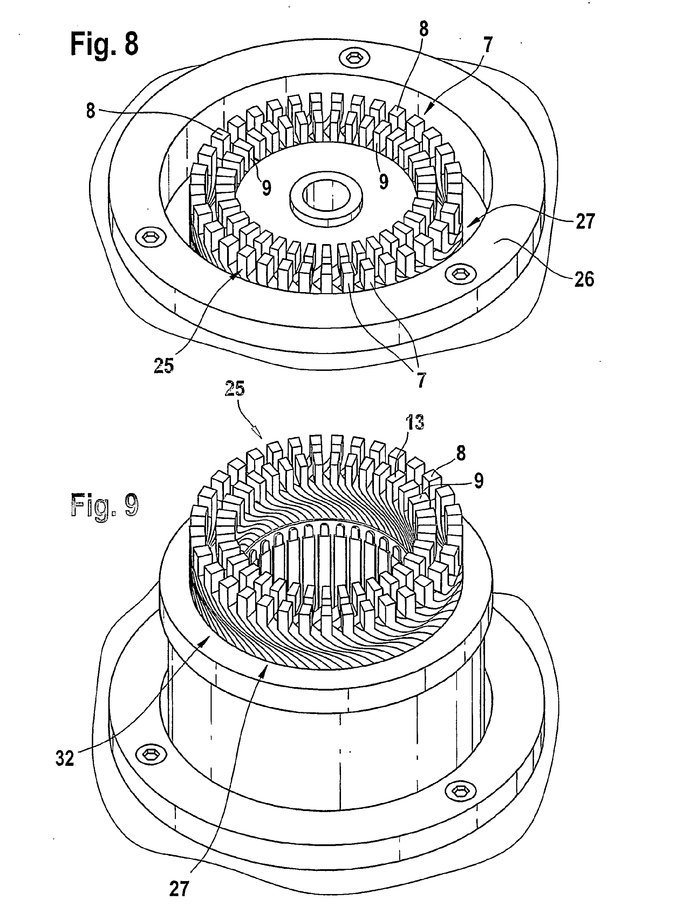

Figur 8 ist die Schaltseite der Wicklung zu entnehmen.

Aus der Draufsicht gemäß Figur 8 geht hervor, dass auf der Schaltseite 25 der Wicklung die ersten Drahtenden 8 und die zweiten Drahtenden 9 der U-Bügelelemente 7 einander gegenüberliegen. Unterhalb der in einer im Wesentlichen plan verlaufenden Ebene liegenden Drahtenden 8 beziehungsweise 9 befinden sich verschränkte Wicklungsdrähte 27. Die Verschränkung auf der Schaltseite 25 der Wicklung erfolgt durch eine Relativbewegung des Schränkwerkzeuges 14 zu einem stationären Teil des Schränkwerkzeuges 26, welches im Wesentlichen von den in Figur 8 nicht dargestellten, parallel zueinander verlaufenden Schenkeln der U-Bügelelemente 7 durchsetzt ist, welche durch die Rundung 10 auf der Sternpunktseite 23 der Wicklung verbunden sind.

Figur 9 ist die Darstellung der Schränkaufnahme auf der Schaltseite der Wicklung zu entnehmen.

Auf der Schaltseite 25 der hergestellten Wicklung 32 liegen die Enden 8 beziehungsweise 9 der verschränkten Wicklungsdrähte 27 auf zwei zueinander konzentrisch verlaufenden Kreisen einander gegenüber. Auch innerhalb der Verschränkung auf der Schaltseite 25 der Wicklung 32 weisen die U-Bügelelemente 7 einen keilförmigen Querschnitt 13 auf.

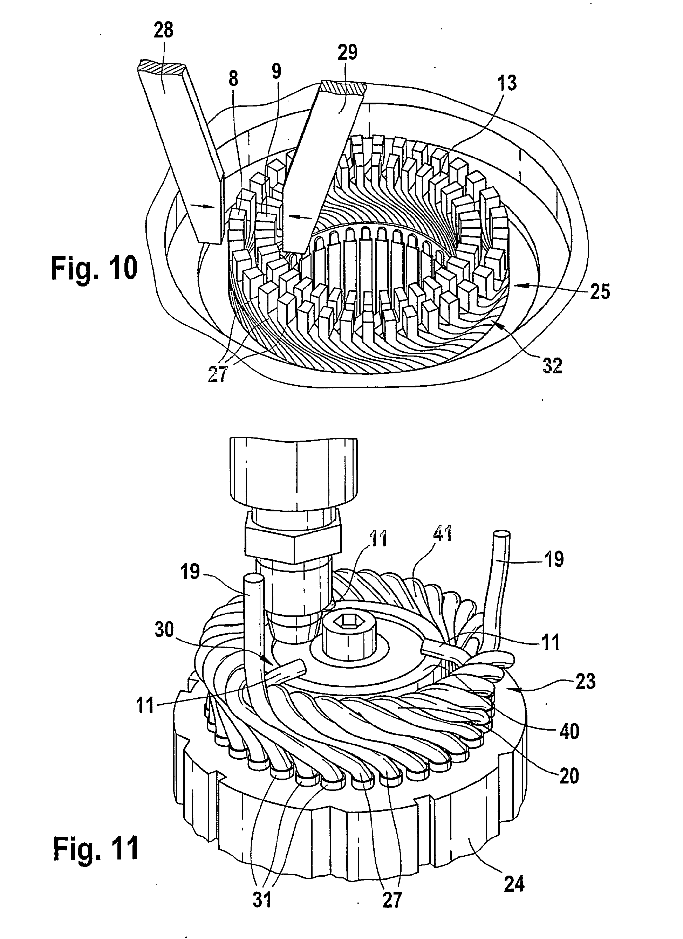

Figur 10 ist die Herstellung der stoffschlüssigen Verbindung auf der Schaltseite der Wicklung 32 zu entnehmen.

Gemäß der Darstellung in Figur 10 ragt die Schaltseite 25 der Wicklung 32 aus der Schränkaufnahme hervor. Die verschränkten Wicklungsdrähte 27 weisen den im Prägewerkzeug 1 gemäß Figur 1 erzeugten keilförmigen Querschnitte 13 auf. Die ersten Drahtenden 8 sowie die zweiten Drahtenden 9 der U-Bügelelemente 7 stehen auf der Schaltseite 25 in einem Abstand zueinander. Mittels einer ersten Backe 28 und einer diesen gegenüberliegenden zweiten Backe 29 werden die Enden 8 beziehungsweise 9 eines jeden U-Bügelelementes 7 aneinander gepresst, bevor eine stoffschlüssige Verbindung auf der Schaltseite 25 der Wicklung 32 erzeugt wird.

Figur 11 zeigt das Erzeugen einer stoffschlüssigen Verbindung auf der Sternpunktseite 23 einer Wicklung.

Die von dem Lamellenpaket 24 umschlossene Wicklung weist auf der Sternpunktseite 23 den Wickelkopf 20 auf. An der Innenseite des Wickelkopfes 20 liegend weisen drei Sternpunktdrähte 11 mit ihren abgewinkelten Enden einander zu. Die einzelnen abgewinkelten Enden der Sternpunktdrähte 11 werden mit einem Sternpunktring 40 stoffschlüssig verbunden. Das stoffschlüssige Fügen der abgewinkelten Enden der Sternpunktdrähte 11 mit dem Sternpunktring 40 kann beispielsweise auf dem Wege des Widerstandsschweißens, des Laserschweißens, des Elektronenstrahlschweißens oder des Lötens erfolgen, wobei das Fügen der abgewinkelten Ende der Sternpunktdrähte 11 mit dem Sternpunktring 40 auch durch Kaltumformungverbindungstechniken erfolgen kann. Auch auf dem Wege des Warmpressens kann eine automatische Kontaktierung der abgewinkelten Enden der Phasendrähte 11 mit dem Sternpunktring 40 erfolgen, so dass der integrierte Sternpunkt 21 entsteht. Über den Wickelkopf 20 auf der Schaltseite 23 hervorstehend und neben den abgewinkelten Enden der Sternpunktdrähte 11 angeordnet, stehen die Leiterelemente 19 über die Oberseite des Wickelkopfes 20 vor.

Aus der Darstellung gemäß Figur 11 geht darüber hinaus hervor, dass unterhalb der verschränkten Wicklungsdrähte 27 der Wicklung diese von Isolationen 31 umschlossen sind. Die beispielsweise durch Pulverbeschichtung oder durch Papierröhren gebildete Isolation 31 wird vor dem Fügevorgang des Drahtkorbes 22 (vgl. Darstellung gemäß Figur 7) mit dem vorbereiteten Lamellenpaket 24 an der Innenseite des Lamellenpaketes 24 ausgebildet.

Aufgrund der Anordnung des Sternpunktringes 40 oberhalb des Wickelkopfes 20 lässt sich in vorteilhafter Weise erreichen, dass der Innendurchmesser des Lamellenpaketes 24 nicht reduziert zu werden braucht. Aufgrund der Anordnung des Sternpunktringes 40 an der Innenseite 41 des Wickelkopfes 20 lässt sich darüber hinaus eine Reduzierung der Baulänge der hergestellten Wicklung 32 erreichen. Ein weiterer Vorteil ist dadurch gegeben, dass keine zusätzlichen Isolationselemente so z.B. Kunststoffmasken oder Isolierpapier erforderlich sind.

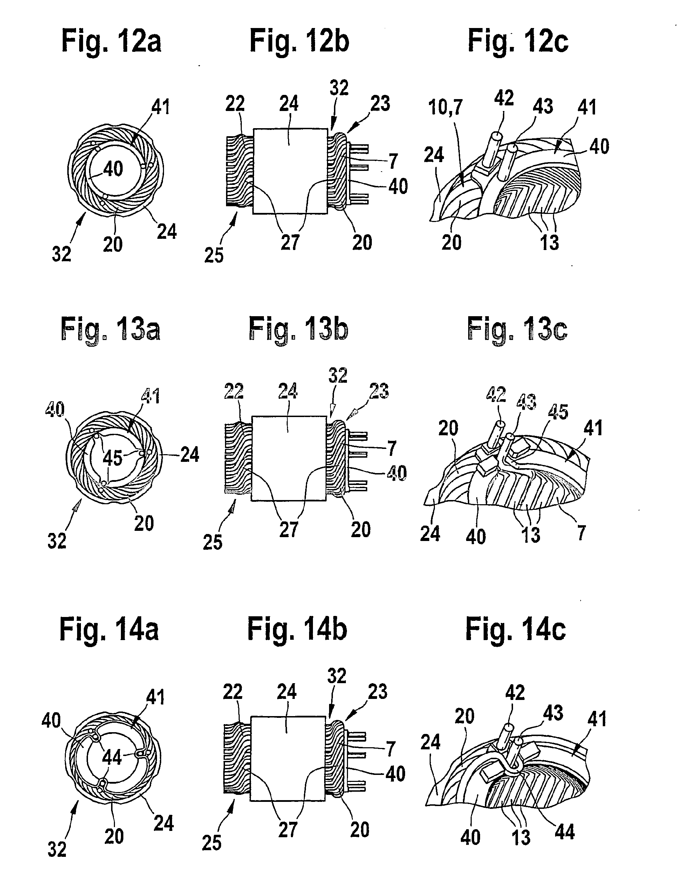

In den Figuren 12a, 12b, 12c; 13a, 13b, 13c und 14a, 14b sowie 14c sind verschiedene Ausführungsvarianten von mit dem erfindungsgemäß vorgeschlagenen Verfahren hergestellten Wicklungen 32 dargestellt.

Diese Wicklungen 32 können beispielsweise an elektrischen Maschinen, wie zum Beispiel Asynchronmotoren, für den Niederspannungsbereich eingesetzt werden. Hinsichtlich der Anwendung in Kraftfahrzeugen können als Asynchronmotoren ausgebildete elektrische Maschinen sowohl als Lenkungsantriebe, Lüfterantriebe, Hydraulikantriebe und als Stellantriebe eingesetzt werden. Ein weiterer Einsatzbereich von Asynchronmotoren, deren Wicklungen im Wege des obenstehend beschriebenen Verfahrens hergestellt sind, sind Fahrantriebe für Gabelstapler oder andere Flurförderfahrzeuge.

In den Figuren sind jeweils Draufsicht, Seitenansicht und Details der Sternpunktseite für eine erste Variante gemäß der Figuren 12a, 12b und 12c, eine zweite Variante gemäß Figur 13a, 13b und 13c sowie eine dritte Variante gemäß Figur 14a, 14b und 14c dargestellt.

Jeder der Ausführungsvarianten gemäß Figur 12a, 13a und 14a in der Draufsicht ist gemeinsam, dass die Wicklung 32 von dem Lamellenpaket 24 umschlossen ist. Der Sternpunktring 40 liegt stets auf der Innenseite 41 des Wickelkopfes 20, so dass in vorteilhafter Weise eine Reduzierung der Baulänge der Wicklung 32 erzielt werden kann.

In der Ausführungsvariante gemäß Figur 13a ist der Sternpunktring 40 mit drei in einer Teilung von 120° zueinander angeordneten Ausnehmungen 45 versehen, während in der Draufsicht auf die Ausführungsvariante der Sternpunktring 40 einzelne, ebenfalls in einem Umfangswinkel von 120° zueinander angeordnete Schlaufen 44 aufweist. Sämtlichen in den Figuren 12a, 13a und 14a dargestellten Ausführungsvarianten ist gemeinsam, dass der Sternpunktring 40 mit seiner stoffschlüssigen Verbindung oberhalb des Wickelkopfes 20 liegt, so dass der Innendurchmesser des die Wicklung 32 umschließenden Lamellenpaketes 24 nicht zu reduzieren ist.

Die Seitenansichten der in den Figuren 12b, 13b und 14b dargestellten Ausführungsvarianten der Wicklung 32 zeigen, dass die Wicklung 32 zwischen der Sternpunktseite 23 und der Schaltseite 25 vom Lamellenpaket 24 umschlossen ist. Sowohl auf der Schaltseite 25 als auch auf der Sternpunktseite 23 sind jeweils verschränkte Wicklungsdrähte 27 zu erkennen. Das Lamellenpaket 24 umschließt die Wicklung 32 im Wesentlichen in dem Bereich, in welchem an dem Drahtkorb 22 streng parallel zueinander verlaufende U-Bügelelemente 7 angeordnet sind. Auf der Sternpunktseite 23 ist der Sternpunktring 40 auf der Innenseite des Wickelkopfes 20 liegend dargestellt. In analoger Weise sind die Wicklungen 32 gemäß der Seitenansichten in den Figurensequenzen B beziehungsweise C ausgebildet.

Die einzelnen in den Figuren 12a, 12b, 12c; 13a, 13b, 13c und 14a, 14b, 14c dargestellten Ausführungsvarianten der Wicklung 32 unterscheiden sich voneinander durch die Ausbildung des Sternpunktringes 40.

Gemäß Figur 12c befindet sich am Wickelkopf 20, der vom Lamellenpaket 24 umschlossen ist und durch die Rundung 10 der U-Bügelelemente 7 gebildet ist, der Sternpunktring 40. Auf diesem ist ein zweiter Anschluss 43 angeordnet, dem gegenüberliegend sich ein erster Anschluss 42 definiert. Der erste Anschluß 42 gemäß Figur 12c korrespondiert zum Leiterelement 19, welches zur Bestromung der Wicklung 32 dient.

Aus der Detailansicht gemäß Figur 13c geht hervor, dass der Sternpunktring 40 die zweiten Anschlüsse 43 im Bereich von im Sternpunktring 40 liegenden ausgebildeten Ausnehmungen 45 umschließt. Die Oberseite des Wickelkopfes 20 ist durch die Rundungen 10 der U-Bügelelemente 7 gebildet. Die Außenseite der Wicklung 32 ist durch das Lamellenpaket 24 umschlossen. Aus dieser perspektivischen Darstellung ist die Keilform 13 der U-Bügelelemente 7 zu erkennen.

Aus der Detailansicht der Wicklung 32 gemäß Figur 14c ist erkennbar, dass die zweiten Anschlüsse 43 von Schlaufen 44 umschlossen sind, welche den Sternpunktring 40 bandförmig an seiner Außenseite umschließen. Die Wicklung ist vom Lamellenpaket 24 an der Außenseite umgeben. Dem zweiten Anschluss 43 liegt ein erster Anschluss 42 gegenüber, der zum Leiterelement 19 zur Bestromung der Wicklung 32 korrespondiert. Die beiden Anschlüsse 42, 43 sind in radialer Richtung voneinander beabstandet. Aus den Detaildarstellungen der Figurensequenz A, B und C geht hervor, dass der Sternpunktring 40, der Sternpunktring 40 mit Ausnehmungen 45 sowie der Sternpunktring 40, der an seiner Außenseite von einem Schlaufen 44 enthaltenden Ring umschlossen ist, jeweils auf der Innenseite 41 des Wickelkopfes 20 liegt. Dies reduziert die Baulänge der erfindungsgemäß hergestellten Wicklung 32 nicht unerheblich.

Die beschriebene Wicklung 32 zeichnet sich einerseits aufgrund der in die U-Bügelelemente 7, 11 sowie 20 eingeprägten Keilform 13 durch einen hohen Nutfüllfaktor aus. Ferner ist die Herstellung der Wicklung 32 automatisierbar, wobei in besonders vorteilhafter Weise die Verschaltung eines integrierten Sternpunktes 21 während der Herstellung der Wicklung 32 erfolgen kann. Auch die Verschaltung des integrierten Sternpunkts 21 ist mittels des erfindungsgemäß vorgeschlagenen Verfahrens automatisierbar. Ferner zeichnet sich die Wicklung 32 mit integriertem Sternpunkt 21 durch eine kompakte und Bauvolumen-minimierte Ausgestaltung aus.

### Bezugszeichenliste

- 1: Prägewerkzeug
- 2: Hydraulikstempel
- 3: Drahtmaterial in Stabform
- 4: erstes Formteil
- 5: zweites Formteil
- 6: Materialeinlauf
- 7: U-Bügelelement
- 8: erstes Drahtende
- 9: zweites Drahtende
- 10: Rundung
- 11: Sternpunktdraht
- 12: Phasendraht
- 13: Keilform
- 14: Schränkwerkzeug
- 15: Außenscheibe
- 16: Innenscheibe
- 17: erste Öffnungen
- 18: zweite Öffnungen
- 19: Leiterelement zur Bestromung der Wicklung 32
- 20: Wickelkopf
- 21: integrierter Sternpunkt
- 22: Drahtkorb
- 23: Sternpunktseite
- 24: Lamellenpaket
- 25: Schaltseite
- 26: Schränkwerkzeug
- 27: verschränkte Wicklungsdrähte
- 28: erste Klemmbacke
- 29: zweite Klemmbacke
- 30: Verschweißung Sternpunktseite
- 31: Isolation
- 32: Wicklung

- 40: Sternpunktring
- 41: Innenseite Wickelkopf
- 42: erster Anschluss
- 43: zweiter Anschluss
- 44: Schlaufe
- 45: Ausnehmung

## Patentansprüche

1. Verfahren zur Herstellung von mehrphasigen Wicklungen (32) einer elektrischen Maschine mit nachfolgenden Verfahrensschritten:
a) dem Einprägen einer den Nutfüllfaktor erhöhenden Querschnittsprofilierung (13) in Drahtelemente (7, 11, 12),
b) dem Bestücken von Schränkwerkzeugen (14, 26) mit den geprägten Drahtelementen (7) zur Ausbildung der Wicklung (32), mit geprägten Drahtelementen (11) zur Ausbildung eines integrierten Sternpunktes (21) und mit geprägten Drahtelementen (12) zur Bestromung der Wicklung (32),
c) dem Verschränken der geprägten Drahtelemente (7, 11, 12) in Schränkwerkzeugen (14, 26) in Endbereichen der Drahtelemente (7, 11, 12) und
d) der Ausbildung einer Verschaltung des integrierten Sternpunktes (21) durch thermisches Fügen (30) oder Kaltkontaktierungstechnik der Drahtelemente (11) für den integrierten Sternpunkt (21) mit einem Verschaltungsring (40) an einer Innenseite (41) eines erzeugten Wickelkopfes (20).

2. Verfahren gemäß Anspruch 1, **dadurch gekennzeichnet, dass** den Drahtelementen (7, 11, 12) eine Querschnittsprofilierung in Keilform (13) aufgeprägt wird.

3. Verfahren gemäß Anspruch 1, **dadurch gekennzeichnet, dass** den Drahtelementen (7, 11, 12) eine ovale oder kreisförmige Querschnittsprofilierung aufgeprägt wird.

4. Verfahren gemäß Anspruch 1, **dadurch gekennzeichnet, dass** die Bestückung der Schränkwerkzeuge (14, 26) mit den geprägten Drahtelementen (7, 11, 12) derart erfolgt, dass die den integrierten Sternpunkt (21) ausbildenden geprägten Drahtelemente (11) in einem Winkel von 120° zueinander versetzt angeordnet sind.

5. Verfahren gemäß Anspruch 1, **dadurch gekennzeichnet, dass** der Wickelkopf (20) durch ein Verschränken der Schränkwerkzeuge (14, 26) geformt wird.

6. Verfahren gemäß Anspruch 1, **dadurch gekennzeichnet, dass** gemäß Verfahrensschritt b) ein Drahtkäfig (22) ausgebildet wird, welcher mit einem Lamellenpaket (24) gefügt wird.

7. Verfahren gemäß Anspruch 6, **dadurch gekennzeichnet, dass** das Lamellenpaket (24) im Fügebereich des Drahtkorbes (22) mit einer Isolation (31) versehen wird.

8. Verfahren gemäß Anspruch 1, **dadurch gekennzeichnet, dass** die die Wicklung (32) ausbildenden geprägten Drahtelemente (7) an einem schaltseitigen Ende (25) der Wicklung (32) miteinander kontaktiert werden.

9. Verfahren gemäß Anspruch 1, **dadurch gekennzeichnet, dass** an einem verschaltungspunktseitigen Ende (23) der Wicklung (32) eine automatisierbare Kontaktierung (30) des integrierten Sternpunktes (21) im Wege des Widerstand-, Laser- oder Elektronenschweißens, im Wege eines Lötverfahrens oder durch Warmpressen oder Kaltpressen erfolgt.

10. Verfahren gemäß Anspruch 9, **dadurch gekennzeichnet, dass** die automatisierbare Kontaktierung (30) durch Verbindung der Drahtelemente (11) zur Ausbildung des integrierten Sternpunktes (21) mit einem Verschaltungsring (40) erfolgt, der Ausnehmungen (45) aufweist oder von einem Ringmaterial umschlossen ist, dessen Schlaufen (44) die Drahtelemente (11) zur Ausbildung des integrierten Sternpunktes (21) umschließen.

## Claims

1. Method for producing polyphase windings (32) of an electrical machine, comprising the following method steps:
a) impressing a cross-sectional profiling (13), which increases the slot space factor, into wire elements (7, 11, 12),
b) fitting setting tools (14, 26) with the shaped wire elements (7) for forming the winding (32), with shaped wire elements (11) for forming an integrated star point (21), and with shaped wire elements (12) for supplying current to the winding (32),
c) setting the shaped wire elements (7, 11, 12) in setting tools (14, 26) in end regions of the wire elements (7, 11, 12), and
d) forming an interconnection of the integrated star point (21) by thermally joining (30) or cold-contacting the wire elements (11) for the integrated star point (21) to an interconnection ring (40) on an inner side (41) of a generated winding overhang (20).

2. Method according to Claim 1, **characterized in that** a cross-sectional profiling of wedge shape (13) is impressed on the wire elements (7, 11, 12).

3. Method according to Claim 1, **characterized in that** an oval or circular cross-sectional profiling is impressed on the wire elements (7, 11, 12).

4. Method according to Claim 1, **characterized in that** the setting tools (14, 26) are fitted with the shaped wire elements (7, 11, 12) in such a way that the shaped wire elements (11) which form the integrated star point (21) are arranged in manner offset at an angle of 120° in relation to one another.

5. Method according to Claim 1, **characterized in that** the winding overhang (20) is formed by setting the setting tools (14, 26).

6. Method according to Claim 1, **characterized in that,** according to method step b), a wire cage (22) is formed which is joined to a lamination stack (24).

7. Method according to Claim 6, **characterized in that** the lamination stack (24) is provided in the joining region of the wire basket (22) with an insulation means (31).

8. Method according to Claim 1, **characterized in that** the shaped wire elements (7) which form the winding (32) make contact with one another at a switching-side end (25) of the winding (32).

9. Method according to Claim 1, **characterized in that** contact (30) which can be automated is made with the integrated star point (21) by way of resistance, laser or electron welding, by way of a soldering method or by hot-pressing or cold-pressing at a connection point-side end (23) of the winding (32).

10. Method according to Claim 9, **characterized in that** contact (30) which can be automated is made by connecting the wire elements (11) for forming the integrated star point (21) to a connection ring (40) which has recesses (45) or is surrounded by a ring material whose loops (44) surround the wire elements (11) for forming the integrated star point (21).

## Revendications

1. Procédé de fabrication d'enroulement polyphasé (32) pour une machine électrique selon les étapes de procédé suivantes :
a) imprimer à des éléments de fils (7, 11, 12) un profil de section (13) augmentant le coefficient de remplissage des rainures,
b) garnissage des outils de décalage (14, 26) avec des éléments de fils (7), imprimés pour former l'enroulement (32), avec des éléments de fils imprimés (11) pour réaliser un point étoile (21) intégré et des éléments de fils (12) imprimés pour l'alimentation électrique de l'enroulement (32),
c) la mise en biais des éléments de fils imprimés (7, 11, 12) dans les outils de mise en biais (14, 26) dans les zones d'extrémité des éléments de fils (7, 11, 12), et
d) réalisation du câblage du point étoile intégré (21) par assemblage thermique (30) ou par mise en contact à froid des éléments de fils (11) pour le point étoile (21), intégré avec une bague de branchement (40) sur le côté intérieur (41) de la tête d'enroulement (20) ainsi réalisée.

2. Procédé selon la revendication 1,
**caractérisé en ce qu'**
on imprime un profil de section en forme de coin (13) aux éléments de fils (7, 11, 12).

3. Procédé selon la revendication 1,
**caractérisé en ce qu'**
on imprime un profil de section ovale ou circulaire aux éléments de fils (7, 11, 12).

4. Procédé selon la revendication 1,
**caractérisé en ce qu'**
on garnit les outils de mise en biais (14, 26) avec des éléments de fils imprimés (7, 11, 12) de façon que les éléments de fils (11), imprimés, avec le point étoile (21), intégré, soient décalés respectivement d'un angle de 120°.

5. Procédé selon la revendication 1,
**caractérisé en ce qu'**
on forme la tête d'enroulement (20) par mise en biais des outils de mise en biais (14, 26).

6. Procédé selon la revendication 1,
**caractérisé en ce que**
selon l'étape de procédé b) on forme une cage de fils (22), que l'on assemble à un paquet de lames (24).

7. Procédé selon la revendication 6,
**caractérisé en ce qu'**
on munit le paquet de lames (24) d'une isolation (31) dans la zone d'assemblage du panier de fils (22).

8. Procédé selon la revendication 1,
**caractérisé en ce que**
les éléments de fils (7), imprimés, réalisant l'enroulement (32), sont mis en contact les uns avec les autres à l'extrémité côté branchement (25) de l'enroulement (32).

9. Procédé selon la revendication 1,
**caractérisé par**
une mise en contact automatisée (30) à l'extrémité (23) côté point de branchement de l'enroulement (32) pour le point étoile (21), intégré, par soudage par résistance, par laser ou par faisceau d'électrons, au cours d'une opération de soudage ou par compression à chaud ou compression à froid.

10. Procédé selon la revendication 9,
**caractérisé en ce que**
la mise en contact automatisée (30) se fait en reliant les éléments de fils (11) pour réaliser le point étoile intégré (21) avec un anneau de branchement (40) qui comporte des cavités (45) ou est entouré par une matière en forme d'anneau dont les boucles (44) entourent les éléments de fils (11) pour former le point étoile intégré (21).
